Europäisches Patentamt

**European Patent Office**

**Office européen des brevets**

(19)

(11) Publication number: **0 037 705**

**A1**

(12) # EUROPEAN PATENT APPLICATION

(21) Application number: **81301416.4**

(22) Date of filing: **01.04.81**

(51) Int. Cl.³: **G 06 F 11/10**

(30) Priority: **01.04.80 US 136262**

(43) Date of publication of application:
**14.10.81 Bulletin 81/41**

(84) Designated Contracting States:
**DE FR GB IT**

(71) Applicant: **HONEYWELL INC.**
**Honeywell Plaza**
**Minneapolis, Minnesota(US)**

(72) Inventor: **Sedalis, Patrick A.**
**244 Grannery Lane**
**North Wales Pennsylvania PA 19054(US)**

(74) Representative: **Harman, Michael Godfrey et al,**
**Honeywell Control Systems Ltd. Patent Department**
**Charles Square**
**Bracknell, Berks(GB)**

(54) **Error correcting memory system.**

(57) Data from a CPU 2 is fed to a DATA portion of a RAM 22 for storage therein, and to a parity generator PG to generate check bits for storage in a check bit CB portion of RAM 22. To read a word, the data and check bit portions are read into latches 24 and 34. The check bits are compared at 32 with fresh parity bits from 26 generated from the data portion. Decoder 38 detects multiple bit (MB), check bit (CB), and data bit (DB) errors, and the latter two are corrected by Exclusive-OR gate sets 36 and 20 respectively. The corrected data and check bits are written back into the RAM, from gates 20 and via buffer 46 respectively. Thus any errors which occur in the RAM are corrected, instead of being allowed to accumulate. Buffers 28 and 48 allow direct access to the CB part of the RAM and the error correcting circuitry for maintenance.

./...

Croydon Printing Company Ltd.

- 1 -

ERROR CORRECTING MEMORY SYSTEM

The present invention relates to a computer memory with error correction.

Memory systems are known which include means for detecting errors in the data stored in the random access memory unit (RAM). Such systems have usually provided means for detecting a single error or a double error and with a capability of correcting a single error in the transmitted data derived from the RAM. Thus the system is capable of correcting single errors in the forward transmission of data. If a double error occurs, an alarm is effected and the system either shuts down or bypasses the erroneous data. In either event, the double error constitutes a fatal error so far as the affected transaction is concerned. If a single error occurs on on cycle of reading from the RAM, the forward transmission is corrected but the error remains in the RAM. If, on a subsequent addressing of the RAM, a second error appears, that second error becomes cumulative with the first error and, therefore, becomes a fatal double error.

It is accordingly, an object of the present invention to provide an improved random access memory assembly for computers.

Accordingly the present invention provides a memory system comprising a storage unit, an ECC (error correcting code) generator which generates an ECC which is stored in the memory unit with a data word, and error detection and correction circuitry which detects and corrects errors in a data word and associated ECC read from the storage unit, wherein the corrected data word and associated ECC bits are written back into the storage unit following each read, whereby the accumulation of errors in the data storage unit is inhibited.

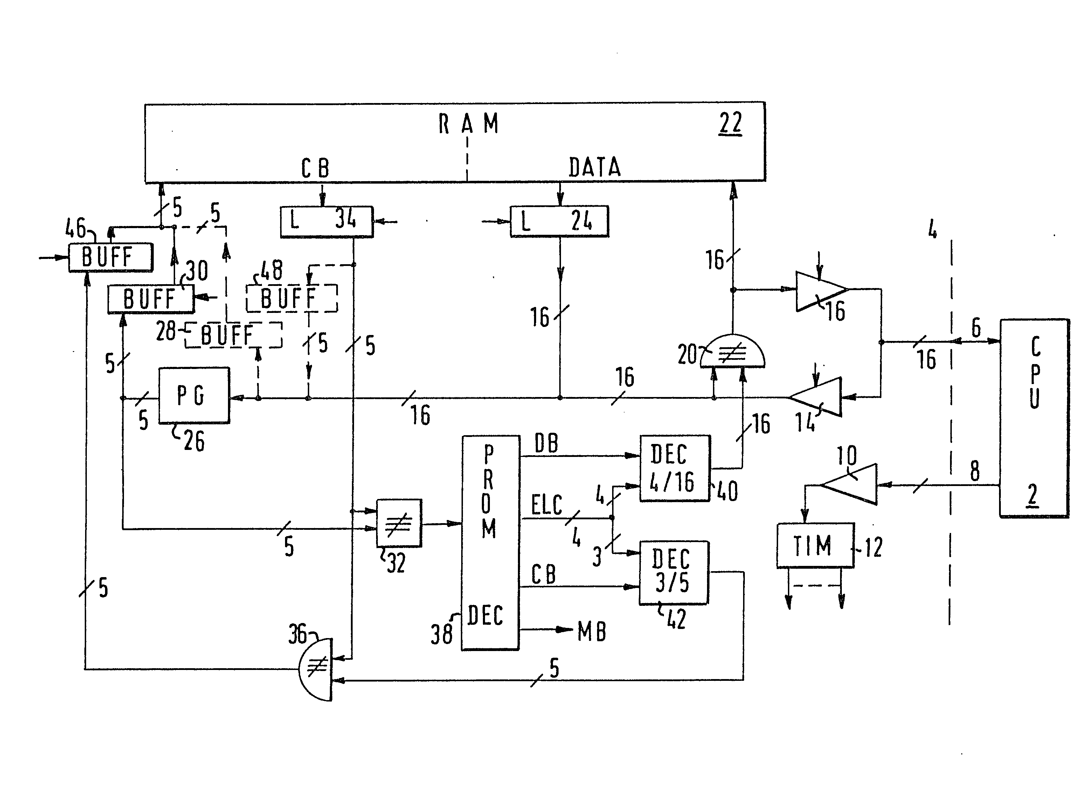

A memory system embodying the invention will now be described, by way of example, with reference to the drawing, which is a block diagram of the system.

Referring to the drawing, the system comprises a CPU 2 coupled to a memory unit card 4 via a control and address bus 8 and a bidirectional data bus 6.  In the memory unit 4, the control bus 8 is coupled via a set of input buffers 10 to a timing and control circuit 12, which generates signals which control the internal sequence of operations of the memory unit. The data bus 6 is coupled to a set of line receivers 14 and a set of line drivers 16, which are each tristate circuits controlled by the timing and control circuit 12.

The system uses 16-bit words and a Hamming code with 5 parity or check bits.  This permits the detection and correction of any single bit error (in the data or the check bits). Since a Hamming code with 5 code bits allows a word length of $2^5 - 1 = 31$ bits in all, while only $16 + 5 = 21$ bits are in fact used in the present system, there are 10 phantom bits, and an error which calls for the correction of one of these phantom bits must therefore be a double bit error.  Thus the system can detect (but not correct) some (but not all) double bit errors.

To write a new word from the CPU 2 in the random access memory (RAM) 22 of the memory unit, the 16 data bits are passed via a set of 16 Exclusive-OR (XOR) gates 20 to the data portion of the RAM 22.  The 16 data bits are also fed to a parity generator (PG) 26, which generates the 5 check bits. These are fed via a buffer 30 to the check bits portion CB of the RAM 22.

To  read a stored word, the full word (16 data bits + 5 check bits) is read out, into a pair of latches 24 and 34 for the data bits and check bits respectively.  The data bits from the latch 24 are fed to the parity generator PG 26, and the 5 parity bits generated thereby are fed to a comparator 32 (which consists of a set of 5 XOR gates), together with the 5 check bits from latch 34.  The 5 bits from comparator 32, in which any 1's indicate parity faults for the respective check bits, are fed to a PROM decoder 38.

The decoder 38 performs a preliminary decoding of the 5-bit input to generate several signals. First, a signal MB is produced if a double bit error is detected. Since this is uncorrectable, this is signalled to the CPU 2 as an alarm signal. Second, if there is a single bit error, this is signalled as either a data bit error (signal DB) or a check bit error (signal CB). Third, a 4-bit error location signal ELC is produced, if there is a single bit error, which encodes (e.g. by a binary code) the location of the erroneous bit.

The signal DB and the 4 bits of the signal ELC are fed to a 4-to-16 decoder 40, which is enables by the signal DB to decode the signal ELC into a 1-out-of-16 form. The decoder 40 feeds the set of XOR gates 20, which are also being fed, from the latch 24, with the data word read out from the RAM 22. Thus any erroneous bit in the data word from latch 24 is corrected by the set of gates 20, which feed the corrected word to the CPU 2 via the drivers 16.

The signal CB and the appropriate 3 of the 4 bits of the signal ELC are fed to a 3-to-5 decoder 42, which is enabled by the signal CB to decode the appropriate 3 bits of the signal ELC into a 1-out-of-5 code. The decoder 42 feeds a set of 5 XOR gates 36, which are also being fed, from the latch 34, with the check bits read out from the RAM 22. Thus any erroneous bit in the check bits from latch 34 is corrected by the set of gates 36, which produce a corrected set of check bits which are fed to a buffer 46.

The data word (corrected if necessary) from the set of gates 20 is written back into the RAM 22, and the check bits from buffer 46 are also written back. Thus, if a correctable error has occurred in the stored word, the word (data plus check bits) in the RAM 22 is corrected as well as the correction being performed on the word (data bits) as sent to the CPU 2.

The memory unit 4 also includes two buffers 28 and 48, each of 5 bits, which are used only for testing and maintenance purposes and are therefore shown by broken lines. These are connected as shown so that, when the error correction circuitry is disabled, information can be written into the check bit portion of the RAM 22 directly from the CPU 2 and read back again directly. Also, by this means a predetermined 5-bit dummy set of check bits can be written into the RAM 22 and thence into the latch 34 to test the operation of the error correction units 38, 40, and 42.

Since the timing and control circuit 12 is self contained on the memory unit card 4, and is responsive only to instruction signals from the CPU 2, the operation of the error detection, correction and rewrite functions on the memory unit card 4 are totally transparent to the CPU 2. Those functions are not dependent upon or responsive to specific control or timing signals from the central processor unit. Further they are accomplished without interruption to the reading and writing functions of the memory unit with respect to transmissions to and from the CPU.

- 5 -

## CLAIMS

1.  A memory system comprising a storage unit (22), an ECC
    (error correcting code) generator (26) which generates an
    ECC which is stored in the memory unit with a data word,
    and error detection and correction circuitry (32,38,40,
    42,20) which detects and corrects errors in a data word
    and associated ECC read from the storage unit, characterized in that the corrected data word and associated ECC
    bits are written back into the storage unit following
    each read, whereby the accumulation of errors in the data
    storage unit is inhibited.

2.  A memory system according to Claim 1, characterized in
    that the error detection and correction circuitry comprises
    a comparator (32) fed with the ECC read from the storage
    unit and a fresh ECC generated from the data word read
    from the storage unit, and decoder means (38,40,42) which
    determines the location of any error in the data word and
    ECC.

3.  A memory system according to Claim 2, characterized in
    that the decoder means includes a first level decoder (32)
    which determines whether or not an detected error is
    correctable.

4.  A memory system according to Claim 3, characterized by
    second level decoder means (40,42) fed from the first level
    decoder (38) and comprising first (40) and second (42)
    decoders which decode the position of errors in the data
    word and ECC respectively.

5.  A memory system according to any previous claim, characterized by internal timing and control means (12) responsive to instructions from an external source (2) to
    which the system is connected to control the operation of
    the system independently of the external source.

0037705

1/1

C P U  2

6  8

4  16

16  14  10  TIM 12

22  16

RAM  DATA  L 24  16  20  16

DEC 4/16  40
DEC 3/5  42

DB  ELC  CB  MB

P R O M  DEC  38

16

CB  L 34  32

16

5  5  5

BUFF 48  BUFF 28  PG 26

BUFF 30  36

5  5  5  5

BUFF 46

## DOCUMENTS CONSIDERED TO BE RELEVANT

| Category | Citation of document with indication, where appropriate, of relevant passages | Relevant to claim |
|---|---|---|
| | <u>GB - A - 1 557 684</u> (SIEMENS)<br>* Page 2, lines 30-50; page 3, lines 43-47; figure * | 1,2 |
| | -- | |
| | <u>US - A - 3 735 105</u> (MALEY)<br>* Column 2, lines 12-26; 47-50; column 4, lines 4-10, 29-67; column 5, lines 1-3; column 6, lines 44-63; figures 1,6 * | 1,2 |
| | -- | |
| | IBM TECHNICAL DISCLOSURE BULLETIN, vol .20, no. 8, January 1978, New York, US<br>BARSUHN : "Avoidance of soft fail accumulation", pages 3187-3188.<br>* Page 3188, lines 1-10; figure * | 1 |
| | -- | |
| | <u>FR - A - 2 379 880</u> (SINGER)<br>* Page 12, lines 9-22; figures 3,4 * | 1 |
| | -- | |
| P | <u>US - A - 4 216 541</u> (CLOVER)<br>* Column 8, lines 9-16 * | 1 |
| | ----- | |

**CLASSIFICATION OF THE APPLICATION (Int. Cl.³)**

G 06 F 11/10

**TECHNICAL FIELDS SEARCHED (Int. Cl.³)**

G 06 F 11/10

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | | |
|---|---|---|---|
| | The present search report has been drawn up for all claims | | |
| Place of search<br>The Hague | Date of completion of the search<br>08-07-1981 | Examiner<br>GUIVOL | |

EPO Form 1503.1   06.78